# EUROPEAN PATENT APPLICATION

(11) **EP 1 882 880 A1**
(43) Date of publication of application: **30.01.2008**
(21) Application number: 07112568.6
(22) Date of filing: 16.07.2007
(51) Int. Cl.: F21V 8/00, G02B 5/04

(54) **Backlit Apparatus with Particular Light-Redirecting Film**

(30) Priority: 17.07.2006 US 487644
(71) Applicant: Rohm and Haas Denmark Finance A/S, 2100 Copenhagen (DK)
(72) Inventor: Mi, Xiang - Dong, Rochester, NY 14650 (US); Nothhard, Gary E, Rochester, NY 14650 (US); Jin, Elaine W, Rochester, NY 14650 (US)
(74) Representative: Buckley, Guy Julian

(57) **Abstract**

A backlight apparatus comprises (a) a light source; (b) a light guiding plate; and (c) a light redirecting article for redirecting light toward various angles, the light redirecting article comprising a plurality of prismatic structures with a selected apex angle, a selected first base angle, a selected second base angle and comprising a material having a selected refractive index value, the selections being sufficient to provide improved luminance at a 60° polar angle wherein the prismatic structures are essentially parallel to the length direction of the light guiding plate.

## Description

### FIELD OF THE INVENTION

This invention generally relates to a backlight apparatus for providing luminance in a large viewing cone and improving light mixing of light emitting diode (LED) light sources and more particularly relates to a backlight apparatus including a single light redirecting prismatic film and having its prismatic structures parallel to the length direction of a light guiding plate.

### BACKGROUND OF THE INVENTION

Liquid crystal displays (LCDs) continue to improve in cost and performance, becoming a preferred display type for many computer, instrumentation, and entertainment applications. The transmissive LCD used in conventional laptop computer displays is a type of backlit display, having a light providing surface positioned behind the LCD for directing light outwards, towards the LCD. The challenge of providing a suitable backlight apparatus having brightness that is sufficiently uniform while remaining compact and low cost has been addressed following one of two basic approaches. In the first approach, a light-providing surface is used to provide a highly scattered, essentially Lambertian light distribution, having an essentially constant luminance over a broad range of angles. Following this first approach, with the goal of increasing on-axis and near-axis luminance, a number of brightness enhancement films have been proposed for redirecting a portion of this light having diffusive distribution in order to provide a more collimated illumination. Among proposed solutions for brightness enhancement films are those described in U.S. Patent No. 5,917,664 (O'Neill et al.); U.S. Patent No. 5,919,551 (Cobb et al), for example.

A second approach to providing backlight illumination employs a light guiding plate (LGP) that accepts incident light from a lamp or other light source disposed at the side and guides this light internally using Total Internal Reflection (TIR) so that light is emitted from the LGP over a narrow range of angles. The output light from the LGP is typically at a fairly steep angle with respect to normal, such as 70 ° or more. With this second approach, a turning film, one type of light redirecting article, is then used to redirect the emitted light output from the LGP toward normal. Directional turning films, broadly termed light-redirecting articles or light-redirecting films, such as that provided with the HSOT (Highly Scattering Optical Transmission) light guide panel available from Clarex, Inc., Baldwin, NY, provide an improved solution for providing a uniform backlight of this type, without the need for diffusion films or for dot printing in manufacture. HSOT light guide panels and other types of directional turning films use arrays of prism structures, in various combinations, to redirect light from a light guiding plate toward normal, or toward some other suitable target angle that is typically near normal relative to the two-dimensional surface. As one example, U.S. Patent No. 6,746,130 (Ohkawa) describes a light control sheet that acts as a turning film for LGP illumination.

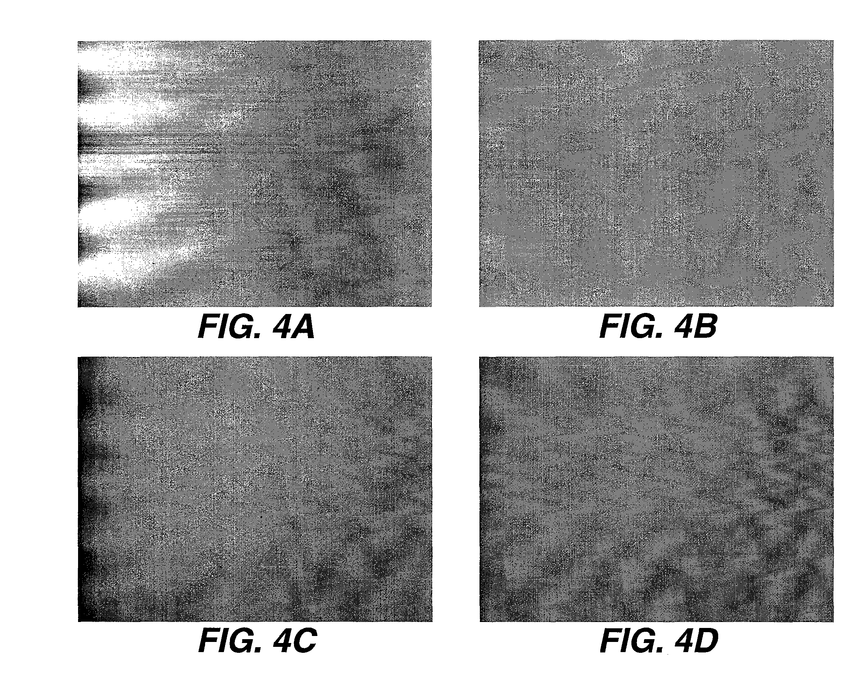

When LEDs are used as a light source, however, there are problems of white spots near the light source, because LEDs are individual light source and emit strong light. This problem will be elaborated referring to Figures 4A and 4C. Another problem associated with the conventional collimation film is the narrow viewing angle. While it is advantageous to have a collimation film such as brightness enhancement films (BEF) from 3M (St. Paul, MN) in a number of applications, there are cases when wide viewing angle is more important especially when high power LEDs are used so that the head-on luminance is well above the needed level.

Thus, there is a need for a light redirecting film solution that provides enhanced light mixing to reduce the white spot problem and widen the viewing angle to take advantage of high power LEDs.

### SUMMARY OF THE INVENTION

The invention provides a backlight apparatus comprising:
(a) a light source for emitting illumination;
(b) a light guiding plate having an input surface for coupling said illumination into the light guiding plate, an output surface to provide output illumination, a length direction, and a width direction; and
(c) a light redirecting article for redirecting light toward various angles, the light redirecting article comprising a plurality of prismatic structures each prismatic structure having a selected apex angle, a selected first base angle, a selected second base angle and comprising a material having a selected refractive index value, the selections being sufficient so that the light luminance along a 60° polar angle to directions parallel to the length direction both (1) away from and (2) toward the light source and (3) to a direction parallel to the width direction are not less than 35% of the luminance along the on-axis direction perpendicular to the LW plane, wherein the prismatic structures are essentially parallel to the length direction of the light guiding plate.

It is an advantage of the present invention that it provides improved light mixing especially for light emitting diode light sources through a light redirecting film with prismatic structures. It is another advantage of the present invention that it provides increased light luminance at a viewing angle of 60°.

### BRIEF DESCRIPTION OF THE DRAWINGS

While the specification concludes with claims particularly pointing out and distinctly claiming the subject matter of the present invention, it is believed that the invention will be better understood from the following description when taken in conjunction with the accompanying drawings, wherein:
Figure 1 A is a schematic cross-sectional view showing a display apparatus using polarizing turning film;
Figure 1B is a schematic top view of Figure 1 A showing a pair of polarizers that are oriented at 45° relative to prismatic structures and grooves of the polarizing turning film;
Figure 1C is a schematic top view of Figure 1 A showing a pair of polarizers that are oriented at 0 or 90° relative to prismatic structures and grooves of the polarizing turning film;
Figure 1D is a schematic top view showing polarizing turning film with arcuately elongated prismatic structures;
Figure 1E is a schematic top view showing polarizing turning film with wavy prismatic structures;
Figure 1F is a schematic top view showing the light source being a number of individual light sources such as LEDs;
Figure 2A is a schematic perspective view showing a display apparatus using a diffuser film and a conventional collimation film;
Figure 2B is a schematic perspective view showing a display apparatus using a diffuser film and two crossed conventional collimation films;
Figure 3A is schematic perspective view showing a comparative display having a single optical film with prismatic structures facing upward and grooves perpendicular to the length direction of the light guiding plate;
Figure 3B is schematic perspective view showing an inventive display having a single optical film with prismatic structures facing upward and grooves parallel to the length direction of the light guiding plate;
Figure 3C is schematic perspective view showing a comparative display having a diffuser film and a single optical film with prismatic structures facing upward and grooves perpendicular to the length direction of the light guiding plate;
Figure 3D is schematic perspective view showing an inventive display having a diffuser film and a single optical film with prismatic structures facing upward and grooves parallel to the length direction of the light guiding plate;
Figure 3E is schematic cross-sectional view of an optical film which is used in Figures 3B and 3D according to the present invention;
Figure 3F is schematic cross-sectional view of an optical film which can be used in Figures 3B and 3D according to the present invention;
Figure 4A is a top view luminance map of a display apparatus of Figure 3A according to a comparative example;
Figure 4B is a top view luminance map of a display apparatus of Figure 3B according to the present invention;
Figure 4C is a top view luminance map of a display apparatus of Figure 3C according to a comparative example;
Figure 4D is a top view luminance map of a display apparatus of Figure 3D according to the present invention; and,
Figures 5A-5D are the measurement geometry configurations used in characterizing the angular light distribution of a display backlight unit.

### DETAILED DESCRIPTION OF THE INVENTION

The present description is directed in particular to elements forming part of, or cooperating more directly with, apparatus in accordance with the invention. It is to be understood that elements not specifically shown or described may take various forms well known to those skilled in the art.

As was noted in the background section above, there have been attempts to reduce the overall complexity of illumination apparatus by incorporating the polarization function within other components in the illumination path. The approaches disclosed in copending US Patent Application Serial No. 11/302,011; US Patent Application Serial No. 11/300,659; and US Patent Application Serial No. 11/302,103, are to incorporate the polarization function within the turning film, or more broadly, within the light redirecting element of the display. These methods employ the Brewster's angle in the design of the light redirecting article's geometry and composition, thereby performing both light redirection and polarization in a single component.

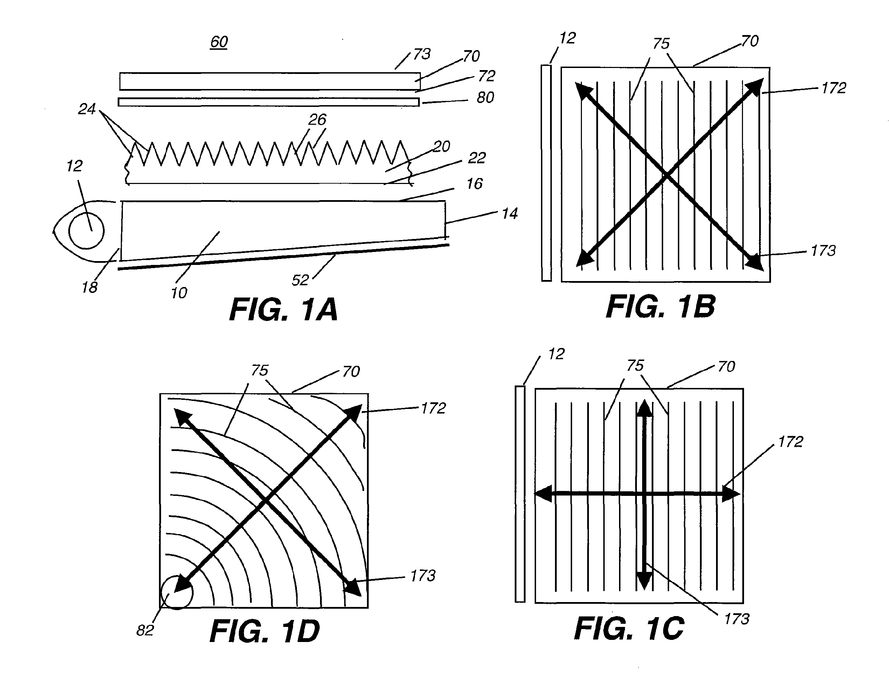

Figures 1 A, 1B, 1C, and 1 D correspond to Figures 6, 7A, 7B, and 7C of US Patent Application Serial No. 11/302,011, respectively. Figure 1A is a schematic cross-sectional view showing a display apparatus 60 using a polarizing turning film 20 having a flat surface 22, a near surface 24 and a far surface 26 relative to a light source 12. Light source 12 is placed at the side of a light guiding plate 10, which has an input surface 18, an end surface 14, and an output surface 16. A reflective film 52 is placed under the light guiding plate 10. This positioning and the design of the light guiding plate 10 dictate the needed angular behavior and design layout of turning films. An LC spatial light modulator 70 modulates polarized light received from the light guiding plate 10 and the turning film 20. A half-wave plate 80 is optional. A back polarizer 72 and a front polarizer 73 are provided for LC spatial light modulator 70 itself; however, these built-in polarizers are absorptive and are necessary for the operation of the LC modulator, unlike the polarizing turning film 20 which does not operate by absorbing light.

Figure 1B is a schematic top view showing polarized light transmission axes 172 and 173 of the polarizers 72, 73 for LC spatial light modulator 70, using a pair of polarizers 72, 73 that are oriented at 45° relative to prismatic structures 75 and grooves of the turning film 20 that extend vertically in the view of Figure 1B. In this case, a half-wave plate 80 is optionally provided between turning film 20 and LC spatial light modulator 70 to change the polarization direction of the polarized light from parallel to the cross section plane to parallel to rear polarizer 72. The optical axis of half-wave plate 80 is oriented at 22.5° relative to rear polarizer 72.

Figure 1C is a schematic top view showing polarized light transmission axes 172 and 173 of the polarizers 72, 73 for LC spatial light modulator 70, using a pair of polarizers oriented at parallel or perpendicular relative to the grooves and prismatic structures 75 of turning film 20. In this case, the LC spatial light modulator 70 can use vertically aligned (VA) LCD or IPS LC elements. Rear polarizer transmission axis 172 is parallel to the plane of the cross section, thus, half-wave plate 80 is not needed.

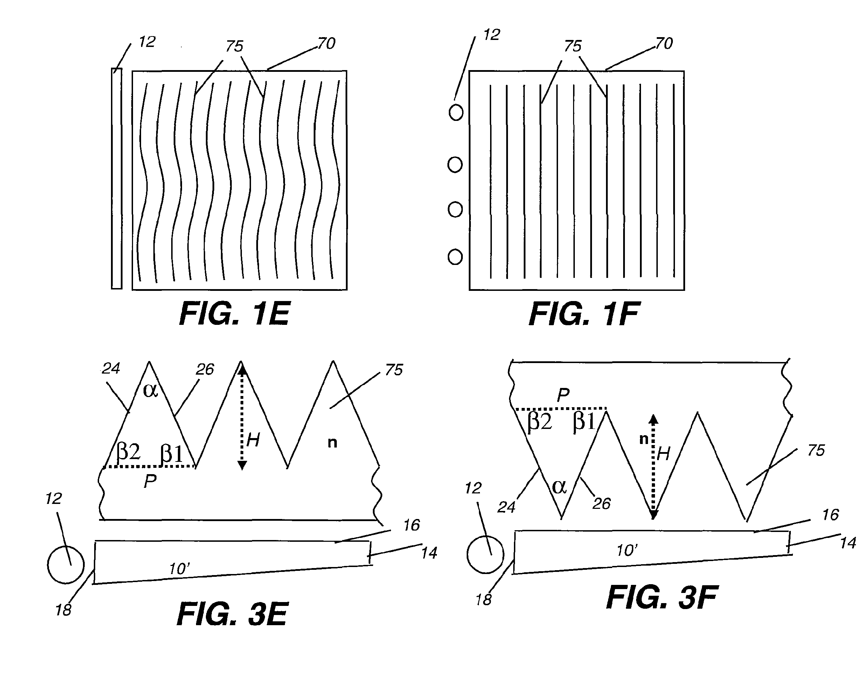

As shown in Figures 1B and 1C, prismatic structures 75 may be elongated in a linear direction and extend substantially in parallel. Prismatic structures 75 may also be elongated in a wavy fashion, but still extend substantially in parallel as shown in Figure 1 E. Figure 1 D is a schematic top view showing polarizing turning film 20 with arcuately elongated prismatic structures 75 in another embodiment. This arrangement is advantageous for employing a point light source such as Light Emitting Diode (LED) at one or more corners of light guiding plate 10 in order to have a more compact design. The rear polarizer transmission axis 172 is more or less parallel to the plane of the cross section, thus, half-wave plate 80 is not needed.

Figure 1F is a schematic top view showing the light source 12 being a number of individual light sources such as LEDs, without showing the polarizer transmission axes 172 and 173. The LEDs can also be the light source as shown in Figures 1A-1E.

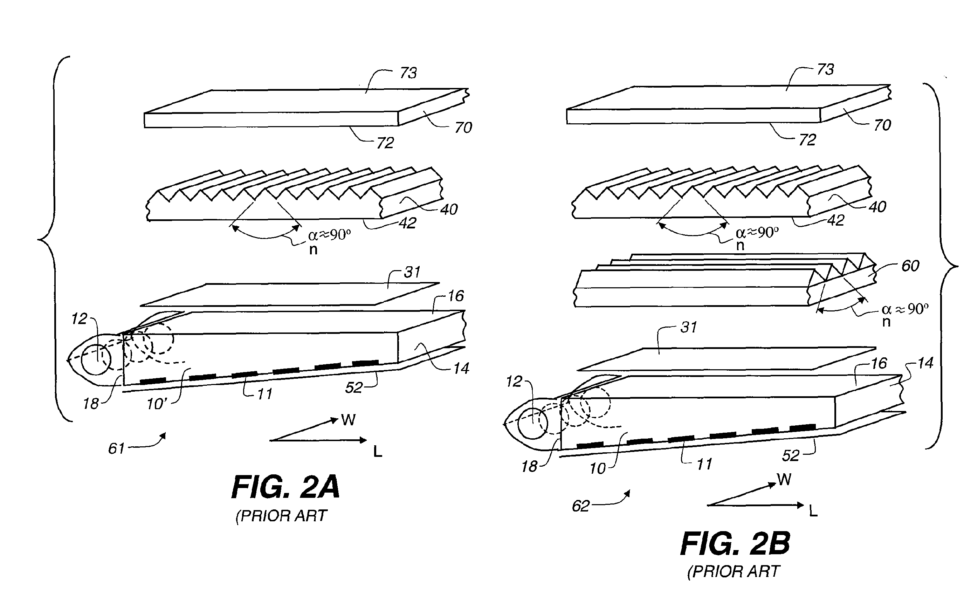

Figure 2A is a schematic perspective view showing a display apparatus 61 using a diffuser film 31 and a conventional collimation film 40 such as the brightness enhancement film (BEF) from 3M (St. Paul, MN). The collimation film typically has a flat surface 42 and prismatic structures on the opposite side of the flat surface 42. The prismatic structures have an apex angle α between 85 and 95°, with 90° being preferred. The refractive index n of the prismatic structures is around 1.58. The light guiding plate 10' has an input surface 18, an end surface 14, and an output surface 16, similar to the one 10 shown in Figure 1A, except the light guiding plate 10' has diffuse elements 11 on the bottom surface while the light guiding plate 10 does not and the apex angle of the polarizing turning film 20 is around 30 degree to 65°. The diffuse elements 11 can be printed white dots or etched pattern. The light source 12 is a few individual light sources such as light emitting diode (LED). Additional diffuser plate may be placed between the LCD 70 and the collimation film 40 to improve light uniformity. In both Figures 1A and 2A, only one optical film having prismatic structures is used, and the grooves of the optical film (26 or 40) are parallel to the width direction (W) of the light guide plate, or perpendicular to the length direction (L) of the light guide plate (10 or 10') in order to function properly.

Figure 2B is a schematic perspective view showing a display 62 which is the same as the display 61 except that it includes a second conventional collimation film 60 such as the brightness enhancement film (BEF) from 3M (St. Paul, MN). The second collimation film 60 is essentially the same as the first collimation film 40 except the tips of the prismatic structures can be somewhat rounded and their thickness can be different. The function of the first collimation film 40 is to collimate light in the plane containing the length direction (L) perpendicular to the light entry side, and the function of the second collimation film 60 is to collimate light in the plane containing the width direction (W) parallel to the light entry side. Displays having a configuration as shown in Figure 2B are widely used in cell phone display and other small to medium sized displays. Display 62 has high head-on luminance due to the collimation effect from the two collimation films 40 and 60. However, very little amount of light is available when the viewing angle is greater than about 45°. This aspect is advantageous for some applications where the power consumption needs to be minimized and only one viewer needs to read the display, but is disadvantageous for some other applications where high efficient LEDs are used so that the head-on luminance is greater than needed when two collimation films are used, and at the meantime a large viewing angle characteristic is essential so that the images on the display can be shared by a few people, and fewer number of optical films are needed for lower cost.

### Experiment 1: light mixing

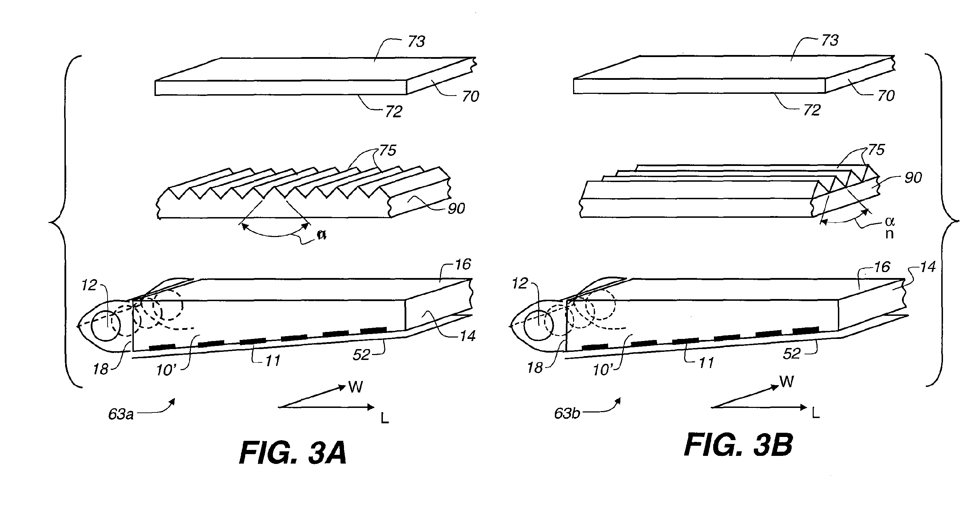

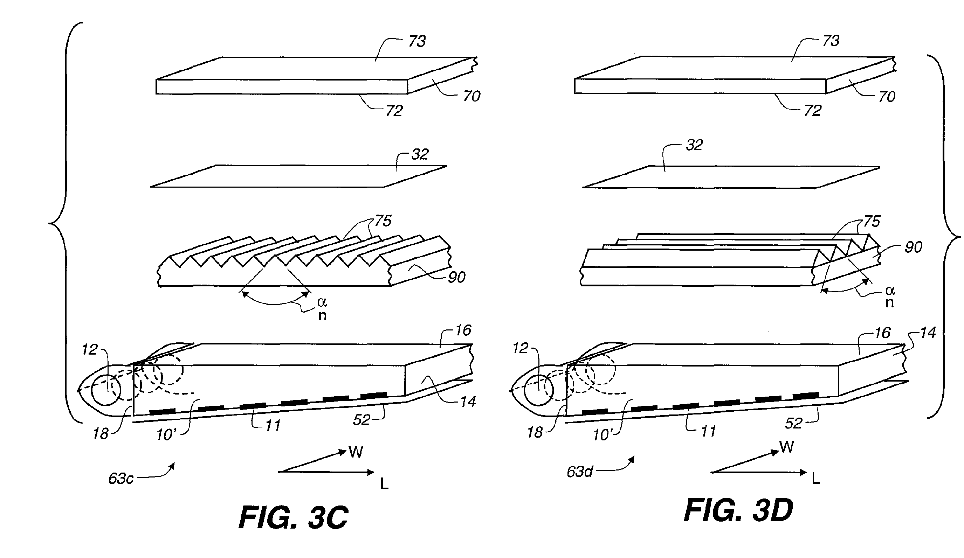

Figures 3B and 3D are schematic perspective views showing displays 63b, 63d according to the present invention having a single optical film 90 with prismatic structures facing upward. The single optical film 90 was not a BEF film with an apex angle of around 90°, instead, it was one of the light redirecting film or the polarizing turning film as discussed in copending US Patent Application Serial No. 11/302,011; US Patent Application Serial No.11/300,659; and , US Patent Application Serial No. 11/302,103. More specific, the prismatic structures 75 were characterized by prism pitch P, prism height H, apex angle α and a first base angle β₁ and a second base angle β₂ as shown in Figure 3E. The apex angle α was about 48°, the first base angle β₁ and the second base angle β₂ being about 64 and 67°, respectively. The grooves of the prismatic structures 75 was arranged essentially parallel to the length direction (L) of the light guiding plate 10', meaning that the grooves of the prismatic structures are oriented within 10°, preferably within 5°, and more preferably with 2° of the length direction (L) of the light guiding plate 10'. The grooves of the prismatic structures 75 was also essentially perpendicular to the width (W) direction of the light guiding plate 10'. The display 63d included a diffuser film 32, while the display 63b did not. The function of the diffuser film 32 is to hide cosmetic defects in the optical film 90 if there are any and the moiré pattern if it is a serious problem. The diffuse film 32 also somewhat improved the light uniformity.

The comparative display 63a shown in Figure 3A was the same as the display 63b shown in Figure 3B except that the grooves of the prismatic structures 75 of the optical film 90 were essentially perpendicular to the length direction (L) of the light guiding plate 10'.

The comparative display 63c shown in Figure 3C is the same as the display 63d shown in Figure 3D except that the grooves of the prismatic structures 75 of the optical film 90 were perpendicular to the length direction (L) of the light guiding plate 10'.

Figures 4A, 4B, 4C, and 4D are top view luminance distribution maps taken from the displays 63a, 63b, 63c, and 63d, respectively. The display backlight unit used in this illustration was part of an iPod Photo Color LCD display, available from Apple (Cupertino, CA), and the digital pictures were taken using a Kodak digital still camera (DX4900 Zoom), available from Eastman Kodak Company (Rochester, NY).

Figure 4A is a top view luminance distribution of a display apparatus 63a shown in Figure 3A according to a comparative example having a single optical film with prismatic structures facing upward and grooves perpendicular to the length direction of the light guiding plate. It can be seen that the spatial luminance distribution was not uniform, and the bright spots due to the individual light sources were visible along the edge where the individual LED light sources were located.

Figure 4B is a top view luminance distribution of a display apparatus 63b shown in Figure 3B according to the present invention having a single optical film with prismatic structures facing upward and grooves parallel to the length direction of the light guiding plate. Figure 4B shows great improvement over Figure 4A in luminance spatial uniformity.

Figure 4C is a top view luminance distribution of a display apparatus 63c shown in Figure 3C according to another comparative example having a single optical film with prismatic structures facing upward and grooves perpendicular to the length direction of the light guiding plate. A diffuser sheet film was placed on top of the light redirecting film. The addition of a diffuser sheet film greatly enhanced the luminance spatial uniformity. However, the bright spots were still visible along the edge where the individual LED light sources were located.

Figure 4D is a top view luminance distribution of a display apparatus 63d according to the present invention having a single light redirecting film with prismatic structures facing upward and grooves parallel to the length direction of the light guiding plate. A diffuser sheet film was located on top of the light redirecting film. In this configuration the spatial luminance distribution was near uniform. The bright spots due to the LED light sources were minimized.

Another comparative example that was the same as Figure 3C except that there was no optical film 90 showed that the diffuse film 32 alone was not sufficient to suppress the white spots problem.

Another comparative example that was the same as Figure 3A except that the optical film 90 was a single brightness enhancement film (BEF) having an apex angle of about 90° also had a similar white spots problem as shown in Figure 4A.

Further detailed description is provided after the following experiments which are described first for better understanding

### Experiments.

In summary, Experiment 1 shows a light redirect film comprising a plurality of prismatic structures each prismatic structure having a selected apex angle, a selected first base angle and a selected second base angle and comprising a material having a selected refractive index, when the prismatic structures are essentially parallel rather than perpendicular to the length direction of the light guiding plate, is capable of suppressing the white spot problem and improving light mixing.

### Experiment 2: enlarging of the viewing angle

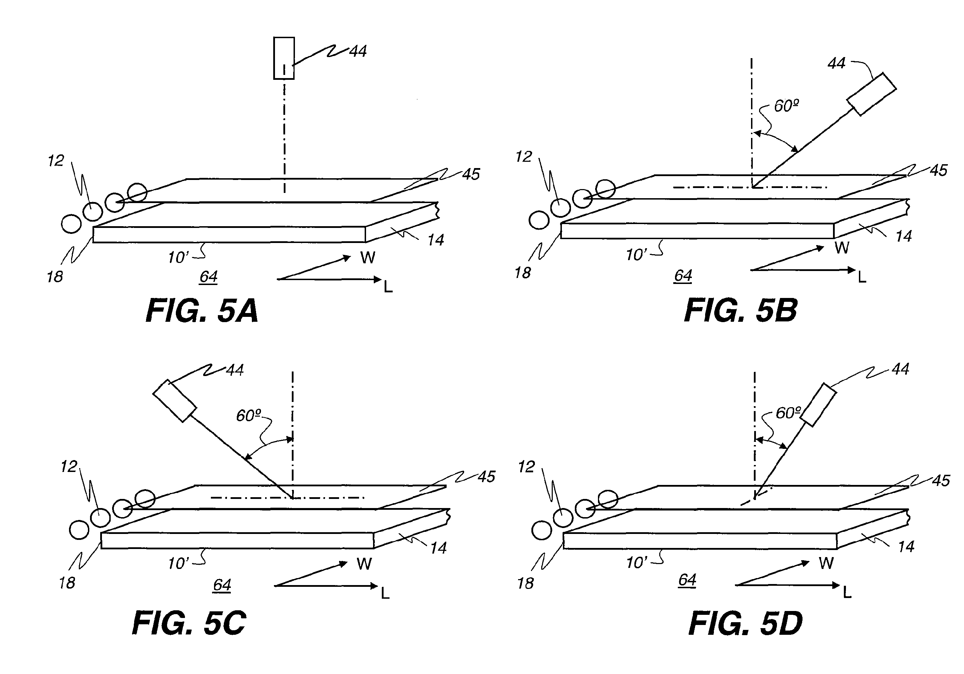

Figures 5A-5D show the measurement geometry configurations used in characterizing the angular light distribution of the display backlight unit discussed referring to Table 1. The angular light distribution of the display backlight unit 64 (part of an iPod photo color display LCD LQ020B7UA01) was measured using a PR650 spectroradiometer 44, available from Photo Research (Chatsworth, CA). One or more optical display films 32 were optionally used on top of the display backlight unit 64. In Figure 5A the measurement was taken at a direction normal or on-axis to the front surface of the display backlight unit. In Figure 5B the measurement was taken at a direction 60° to the normal of the front surface of the display backlight unit, in a direction directly away from the LED light sources 12. In Figure 5C the measurement was taken at a direction 60° to the normal of the front surface of the display backlight unit, in a direction toward the LED light sources 12. In Figure 5D the measurement was taken at a direction 60° to the normal of the front surface of the display backlight unit, and in a plane parallel to W or the LED edge 18 of the light guiding plate 10'. Table 1 shows the luminance level (unit cd/m²) measured for five display backlight unit configurations according the measurement geometry shown in Figures 5A-D. In Example 1, no optical film 45 was used. In Example 2-4 the grooves of the prismatic film were all perpendicular to the LED edge, the input surface 18 of the light guiding plate 10', or the width direction W of the light guiding plate (as shown in Figure 3). In Example 5 two BEFs were used, and the configuration is shown in Figure 2B.

**TABLE 1**

| Example No | Type | Optical film 45 | Luminance by Geometry Per FIG 5 (cd/m²) | | | | Ratio least of (5B,5C,5D)/5A |
|---|---|---|---|---|---|---|---|
| | | | 5A | 5B | 5C | 5D | |
| | | | On-axis | toward light | away from light | transverse to light | |
| 1 | Comp. | No film | 523 | 2140 | 285 | 726 | 54% |
| 2 | Inv. | Prismatic film | 688 | 1334 | 287 | 506 | 42% |
| | | (α≈48°, n=1.63) | | | | | |
| 3 | Inv. | Prismatic film | 665 | 1245 | 307 | 547 | 46% |
| | | (α≈48°, n=1.59) | | | | | |
| 4 | Comp. | BEF | 732 | 613 | 143 | 366 | 20% |
| | | (α≈90°, n=1.58) | | | | | |
| 5 | Comp. | two | 1650 | 286 | 264 | 339 | 16% |
| | | BEFs (α≈90°, n=1.58) | | | | | |

### Example 1 (Comparative example)

In Example 1, the display backlight unit did not have any optical display film. The on-axis luminance level (5A geometry) was low compared to configurations where optical display films were used (Examples 2-5). Because it did not have an optical film, this configuration showed unacceptable white spots problem.

### Example 2 (Inventive example)

In Example 2, the display backlight unit included an optical film 45 with prismatic structures having an apex angle α of about 48° and made of a material with refractive index of about 1.63 (polysulfone) according to the present invention. The grooves of the prismatic film were parallel to the length direction (L) of the light guiding plate 10', or perpendicular to the LED edge. The on-axis luminance level was enhanced compared to Example 1. It also maintained a reasonable luminance level in 5B, 5C or 5D measurement geometry.

### Example 3 (Inventive example)

Example 3 was the same as Example 2 except the optical film 45 had prismatic structures having an apex angle α of about 48° and being made of a material with refractive index of about 1.59 (polycarbonate) according to the present invention. The grooves of the prismatic film were parallel to the length direction (L) of the light guiding plate 10'. The on-axis luminance level was enhanced compared to Example 1. It also maintained a reasonable luminance level in 5B, 5C or 5D measurement geometry.

### Example 4 (Comparative example)

Example 4 was the same as Example 2 except the optical film 45 was a conventional brightness enhancement film (BEF) having an apex angle of about 90° and made of a material with refractive index of about 1.58. The grooves of the prismatic film are parallel to the length direction (L) of the light guiding plate 10'. The on-axis luminance level was better than Examples 2 and 3. However, the off-axis performance, as indicated in columns 5B-D, was much lower compared to Examples 2-3, indicating a narrower viewing angle for this configuration.

### Example 5 (Comparative example)

Example 5 was the same as Example 2 except the optical film 45 included two conventional brightness enhancement films (BEF), each having an apex angle of about 90° and made of a material with refractive index of about 1.58. The grooves of the prismatic film were parallel or perpendicular to the length direction (L) of the light guiding plate 10', and perpendicular to each other. The on-axis luminance level was the best among all examples. However, the off-axis performance, as indicated in columns 5B-D, was the lowest among all examples, indicating a much narrower viewing angle for this configuration.

Examples 2 through 5 showed that not every optical film with prismatic structures facing up and having their grooves parallel to the length direction of the light guiding plate was capable of widening the viewing angle. In the two inventive Examples 2 and 3, the optical film 45 had a selected apex angle α and a selected refractive index, which enabled the luminance level at three directions (away from the light source, near the light source, and parallel to the light source, shown in Figures 5B, 5C, and 5D, respectively) about 60° from the normal to be greater than about 42% (Example 2) and 46% (Example 3) of the luminance level at the normal direction. In contrast, the last column of Table 1 shows that the ratio of luminance levels of the least amount among 5B, 5C, and 5D geometry (60° from the normal) and 5A geometry (normal direction) was about 20% for comparative Example 4, and about 16% for comparative Example 5. Example 1 did not have an optical film and consequently had white spots problem, making it undesirable, despite the fact that the ratio was high.

### Further Detailed Description

Although in Experiment 1 and Experiment 2, only a few light redirecting films of specific prismatic structures and materials were used, it is expected that a light redirecting film is capable of enhancing light mixing and redirecting light toward various angles such that the light luminance along a polar angle of 60° is not less than 35%, more preferably not less than 40% of that along on-axis direction when the light redirecting film comprises a plurality of prismatic structures each prismatic structure having a selected apex angle, a selected first base angle and a selected second base angle and comprises a material having a selected refractive index.

The Apex angle is desirably between either 40 and 65° or 20 and 35°. When a material having a refractive index of less than about 1.78 is used, the apex angle is typically from about 40 to 60° or from about 20 to 30°, with the first and second base angles summing to the compliment of the apex angle to sum to 180°. Typically base angles range from 62 to 70°. When a material having a refractive index of greater than about 1.78 is used, the apex angle of the prismatic structures is typically from about 56 to 65° or from about 28 to 33°, with the first and second base angles summing to the compliment of the apex angle to sum to 180°. The first and second base angles typically vary from 62 to 70°. In some cases, one of the two base angles may be in a range of 85 to 95°.

It is also within the scope of the invention to employ a light redirecting film having prismatic structures facing downward with a selected apex angle, a selected first base angle and a selected second base angle, and comprising a material having a selected refractive index as shown in Figure 3F, meeting the requirement that the light redirecting film is capable of redirecting light toward various angles and the light luminance along any of the three primary polar angles of 60° is not less than 35%, more preferably not less than 40% of that along the on-axis direction, and is capable of enhancing light mixing, when the grooves of its prismatic structures is arranged essentially parallel to the length direction of the light guiding plate. In this case, the prismatic structures of the light redirecting film is.located between the light guiding plate and its flat surface.

Materials of choice include any available transparent polymers and copolymers of desired refractive index such as polycarbodiimide copolymers which are excellent in heat stability and has high workability and moldability, as is disclosed in US Patent Application Publication No. 2004/0158021 entitled "Polycarbodiimide having high index of refraction and production method thereof' by Sadayori et al., published on Aug. 12, 2004. Indices of refraction for these materials varied from 1.738 to 1.757 at 589 nm. Materials with doped microspheres or beads of high index materials such as titania, zirconia, and baria also show high indices of refraction that may be smaller or greater than 1.7, as disclosed in US Patent Application Publication No. 2004/0109305 entitled "HIGH INDEX COATED LIGHT MANAGEMENT FILMS" by Chisholm et al. Materials of high index of refraction also include many polyesters such as polyethylene naphthalate (PEN) and Polybutylene 2,6-Naphthalate (PBN). These materials have refractive indices varying from about 1.64 to as high as about 1.9, as discussed in U.S. Patent No. 6,830,713 entitled "Method for making coPEN/PMMA multilayer optical films" to Hebrink et al. Other known materials having an index of refraction between 1.59 and 1.98 can be used as well. Acrylates suitable for UV curing method can also be adopted.

The apparatus of the present invention uses light-redirecting structures that are generally shaped as prisms. In more formal definition, true prisms have at least two planar faces. Because, however, one or more surfaces of the light-redirecting structures need not be planar in all embodiments, but may be curved, have multiple sections, or have truncated or rounded tips or apex angles, as discussed in copending US Patent Application Serial No. 11/302,011; US Patent Application Serial No. 11/300,659; and , US Patent Application Serial No. 11/302,103, the more general term "prismatic structure" is used in this specification. In addition, the prismatic structures may have different index of refraction than its substrate, also as discussed in the above cited co-pending applications.

Thus, the present invention provides a light redirecting film solution that provides luminance in a large viewing cone and improving light mixing of light emitting diode light source using a reduced number of components.

The entire contents of the patents and other publications referred to in this specification are incorporated herein by reference. The invention has been described in detail with particular reference to certain preferred embodiments thereof, but it will be understood that variations and modifications can be effected within the spirit and scope of the invention.

### PARTS LIST

- 10, 10'.: Light guiding plate
- 11.: Diffuse elements
- 12.: Light source
- 14.: End surface
- 16.: Output surface
- 18.: Input surface
- 20.: Turning film
- 22.: Flat surface
- 24.: Near surface
- 26.: Far surface
- 31, 32.: Diffuser film
- 40.: Collimation film
- 42.: Flat surface
- 44.: Spectroradiometer
- 45.: Optical film
- 52.: Reflective film
- 60, 61, 62, 63a, 63b, 63c, 63d.: Display apparatus
- 64.: Display backlight unit
- 70.: LC spatial light modulator
- 72.: Rear polarizer
- 73.: Front Polarizer
- 75.: Prismatic structure
- 80.: Half wave plate
- 90.: Optical film with prismatic structures
- 172, 173.: Transmission axes
- α.: Apex angle
- β1.: Base angle
- β2.: Base angle
- n.: Refractive index
- W.: Width direction of the light guiding plate
- L.: Length direction of the light guiding plate

## Claims

1. A backlight apparatus comprising:
(a) a light source for emitting illumination;
(b) a light guiding plate having an input surface for coupling said illumination into the light guiding plate, an output surface to provide output illumination, a length direction L perpendicular to the light entrance surface, and a width direction W parallel to the light entrance surface; and
(c) a light redirecting article for redirecting light toward various angles, the light redirecting article comprising a plurality of prismatic structures each prismatic structure having a selected apex angle, a selected first base angle, a selected second base angle and comprising a material having a selected refractive index value, the selections being sufficient so that the light luminance along a 60° polar angle to directions parallel to the length direction both (1) away from and (2) toward the light source and (3) to a direction parallel to the width direction are not less than 35% of the luminance along the on-axis direction perpendicular to the LW plane, wherein the prismatic structures are essentially parallel to the length direction of the light guiding plate.

2. The backlight apparatus of claim 1 further comprising a diffuser film.

3. The backlight apparatus of claim 1, wherein the said prismatic structures have an apex angle within a range of 40 to 60°.

4. The backlight apparatus of claim 1, wherein the said prismatic structures having a rounded apex.

5. The backlight apparatus of claim 1, wherein the light redirecting article has a flat surface located between the light guiding plate and the prismatic structures of the light redirecting article.

6. The backlight apparatus of claim 1, wherein the light-redirecting article has a flat surface and the prismatic structures of the light redirecting article are located between the light guiding plate and the flat surface.

7. The backlight apparatus of claim 1, wherein the said light source comprising a light emitting diode light source.

8. The backlight apparatus of claim 1, wherein the apex angle is either between 40 and 65° or 20 and 35°.

9. The backlight apparatus of claim 1 with a film refractive index less than about 1.78 and an apex angle of from about 40 to 60° or from about 20 to 30°.

10. The backlight apparatus of claim 1 with a film refractive index greater than about 1.78 and an apex angle of from about 56 to 65° or from about 28 to 33°.

11. A backlight apparatus comprising:
(a) a light source for emitting illumination;
(b) a light guiding plate having an input surface for coupling said illumination into the light guiding plate, an output surface to provide output illumination, a length direction L, and a width direction W; and
(c) a light redirecting article for redirecting light, the light redirecting article comprising a plurality of prismatic structures each prismatic structure having a selected apex angle in a range of 40 to 60°, a first base angle and a second base angle, comprising a material having a selected refractive index, wherein the prismatic structures are essentially parallel to the length direction of the light guiding plate for enhanced light mixing.

12. The backlight apparatus of claim 11 wherein the selected refractive index is less than about 1.78.

13. The backlight apparatus of claim 11, the selections being sufficient so that the light luminance along a 60° polar angle to directions parallel to the length direction both (1) away from and (2) toward the light source and (3) to a direction parallel to the width direction are not less than 35% of the luminance along the on-axis direction perpendicular to the LW plane.

14. A backlight apparatus comprising:
(a) a light source for emitting illumination;
(b) a light guiding plate having an input surface for coupling said illumination into the light guiding plate, an output surface to provide output illumination, a length direction L, and a width direction W; and
(c) a light redirecting article for redirecting light, the light redirecting article comprising a single sheet having a plurality of prismatic structures each prismatic structure having a selected apex angle, a selected first base angle and a selected second base angle, comprising a material having a selected refractive index in a range of 1.59 and 1.85, wherein the prismatic structures are essentially parallel to the length direction of the light guiding plate for enhanced light mixing.

15. The backlight apparatus of claim 14, wherein the light redirecting article redirects light such that the light luminance along a polar angle of 60° to the L and W directions is not less than 35% of that along the on-axis direction.

16. The backlight apparatus of claim 15, wherein the light source comprises a light emitting diode light source.

17. The backlight apparatus of claim 15 further comprising a diffuser film.

18. An electronic display comprising: a liquid crystal modulator, and a backlight apparatus, the backlight apparatus comprising:
(a) a light source for emitting illumination;
(b) a light guiding plate having an input surface for coupling said illumination into the light guiding plate, an output surface to provide output illumination, a length direction L, and a width direction W; and
(c) a light redirecting article for redirecting light toward various angles, the light redirecting article comprising a plurality of prismatic structures each prismatic structure having a selected apex angle, a selected first base angle, a selected second base angle and comprising a material having a selected refractive index value, the selections being sufficient so that the light luminance along a 60° polar angle to directions parallel to the length direction both (1) away from and (2) toward the light source and (3) to a direction parallel to the width direction are not less than 35% of the luminance along the on-axis direction perpendicular to the LW plane, wherein the prismatic structures are essentially parallel to the length direction of the light guiding plate.

19. An electronic display of claim 18 further comprising a diffuser film.

20. An electronic display of claim 18 further comprising a light emitting diode light source.
